# EUROPÄISCHE PATENTSCHRIFT

(11) **EP 1 948 980 B1**
(45) Veröffentlichungstag und Bekanntmachung des Hinweises auf die Patenterteilung: **27.06.2012**
(21) Anmeldenummer: 06818537.0
(22) Anmeldetag: 15.11.2006
(51) Int. Cl.: F16H 59/68, F16H 61/04

(54) **VERFAHREN ZUR STEUERUNG UND STEUERUNGSEINRICHTUNG EINES AUTOMATISIERTEN, UNSYNCHRONISIERTEN ZAHNRÄDERWECHSELGETRIEBES EINES KRAFTFAHRZEUGS**
METHOD FOR CONTROLLING, AND CONTROL DEVICE OF, AN AUTOMATED, UNSYNCHRONIZED GEAR-CHANGE TRANSMISSION OF A MOTOR VEHICLE
PROCEDE DE COMMANDE ET DISPOSITIF DE COMMANDE D'UNE BOITE DE VITESSES AUTOMATISEE A ENGRENAGES, NON SYNCHRONISEE, D'UN VEHICULE AUTOMOBILE

(30) Priorität: 17.11.2005 DE 102005054767
(43) Veröffentlichungstag der Anmeldung: 30.07.2008
(73) Patentinhaber: Daimler AG, 70327 Stuttgart (DE)
(72) Erfinder: GUGGOLZ, Manfred, 71277 Rutesheim (DE); HILLENBRAND, Werner, 72639 Neuffen (DE); ULMER, David, 70794 Filderstadt (DE); VEIT, Markus, 72124 Pliezhausen (DE)
(74) Vertreter: JENSEN & SON
(86) Internationale Anmeldenummer: PCT/EP2006/010926
(87) Internationale Veröffentlichungsnummer: WO 2007/057161

(56) Entgegenhaltungen:
- EP-A- 0 608 978
- EP-A2- 1 184 605
- DE-A1- 19 708 930
- US-A- 5 099 711
- US-A- 5 899 829

## Beschreibung

Die Erfindung betrifft ein Verfahren zur Steuerung eines automatisierten, unsynchronisierten Zahnräderwechselgetriebes eines Kraftfahrzeugs gemäß Anspruch 1 und eine Steuerungseinrichtung eines automatisierten, unsynchronisierten Zahnräderwechselgetriebes eines Kraftfahrzeugs gemäß Anspruch 14.

Die EP 0 161 521 A1 beschreibt ein Verfahren zur Steuerung eines automatisierten, unsynchronisierten Zahnräderwechselgetriebes eines Kraftfahrzeugs. Bei dem Verfahren wird ein Einlegen eines Zielgangs abgebrochen, wenn eine festlegbare Zeitspanne seit Beginn des Einlegens abgelaufen ist, ohne dass das Einlegen abgeschlossen werden konnte. In diesem Fall wird das Getriebe in eine Neutralstellung gebracht.

Die gattungsbildende US 5 099 711 beschreibt ein Verfahren zur Steuerung eines automatisierten, unsynchronisierten Zahnräderwechselgetriebes eines Kraftfahrzeugs, wobei ein Zielgang durch Herstellen einer formschlüssigen Verbindung zwischen Schaltelementen des Zielgangs mittels eines Schaltaktors eingelegt wird. Bei einer Ansteuerung des Schaltaktors zum Einlegen des Zielgangs wird überwacht, ob ein Ratschen der Schaltelemente des Zielgangs vorliegt. Bei Vorliegen eines Ratschens wird das Einlegen des Zielgangs abgebrochen.

Um einen Gang in einem unsynchronisierten Zahnräderwechselgetriebe einzulegen, muss eine formschlüssige Verbindung zwischen Schaltelementen des Zielgangs, beispielsweise eines Losrads und einer Schaltmuffe durch Verschieben der Schaltmuffe hergestellt werden. Damit wird das Losrad mit einer Welle des Getriebes verdrehfest verbunden. Da ein unsynchronisiertes Zahnräderwechselgetriebe nicht über Synchronisiereinrichtungen für jeden Gang verfügt, kann ein Gang nur eingelegt werden, wenn zwischen den Schaltelementen kein zu großer Drehzahlunterschied herrscht, da sonst die Klauen des Losrads nicht mit den Klauen der Schaltmuffe einspuren können. Zum Einlegen wird die Schaltmuffe von einem Schaltaktor gegen das Losrad gedrückt, so dass ein Kontakt zwischen den Klauen hergestellt wird. Kann auf Grund der Drehzahldifferenz zwischen den Schaltelementen kein Einspuren stattfinden, so weisen sich die Klauen gegen die Kraft des Schaltaktors gegenseitig ab, was zu Schädigungen der Klauen und damit des Zahnräderwechselgetriebes führen kann. Dieses Abweisen wird als so genanntes Ratschen bezeichnet.

Es ist die Aufgabe der Erfindung ein Verfahren zur Steuerung und eine Steuerungseinrichtung eines automatisierten, unsynchronisierten Zahnräderwechselgetriebes eines Kraftfahrzeugs vorzuschlagen, mittels welchen Schädigungen des Zahnräderwechselgetriebes beim Einlegen eines Zielgangs verhindert werden. Erfindungsgemäß wird die Aufgabe durch ein Verfahren mit den Merkmalen des Anspruchs 1 und durch eine Steuerungseinrichtung mit den Merkmalen des Anspruchs 14 gelöst.

Es wird bei einer Ansteuerung des Schaltaktors zum Einlegen des Zielgangs überwacht, ob ein Ratschen der Schaltelemente des Zielgangs vorliegt. Ein Ratschen kann dabei auf verschiedene Arten erkannt werden. Beispielsweise können dazu Drehzahlsignale der Schaltelemente des Zielgangs ausgewertet werden. Eine weitere Möglichkeit besteht darin, dass ein einen Schaltweg des Schaltaktors kennzeichnendes Schaltwegsignal ermittelt wird und das genannte Schaltwegsignal zur Überwachung eines Ratschens ausgewertet wird. Darüber hinaus sind weitere, dem Fachmann als sinnvoll erachtete Methoden zur Ermittlung eines Ratschens denkbar.

Sobald ein Ratschen erkannt wird, wird das Einlegen des Zielgangs abgebrochen. In diesem Fall wird der Schaltaktor und damit die Schaltmuffe in eine Neutralstellung gebracht, in der kein Kontakt zwischen den Schaltelementen des Zielgangs besteht. Falls ein Einlegen des Zielgangs nach wie vor erforderlich ist, wird ein neuer Versuch zum Einlegen gestartet.

Damit wird das Zahnräderwechselgetriebe sicher vor Beschädigungen geschützt, da sofort bei Erkennung eines Ratschens das Einlegen des Zielgangs abgebrochen und das Ratschen somit beendet wird.

Der Schaltaktor kann dabei beispielsweise als eine hydraulische oder pneumatische Kolben-Zylinder-Einheit oder als ein Elektromotor ausgeführt sein.

Erfindungsgemäß wird ein einen Schaltweg des Schaltaktors kennzeichnendes Schaltwegsignal ermittelt. Das genannte Schaltwegsignal wird zur Überwachung eines Ratschens nach einer zweiten Methode ausgewertet. Es werden ein lokales Minimum und ein lokales Maximum des Schaltwegsignals ermittelt. Ausgehend davon wird ein zeitlicher Abstand und/oder ein Differenzschaltweg zwischen lokalem Minimum und lokalem Maximum bestimmt. Der Abstand und der Differenzschaltweg werden insbesondere immer zwischen dem letzten Minimum bzw. Maximum und dem neu bestimmten Maximum bzw. Minimum ermittelt. Der Abstand und der Differenzschaltweg werden anschließend zur Überwachung eines Ratschens ausgewertet. Ein Ratschen wird insbesondere dann erkannt, wenn der zeitliche Abstand kleiner als ein Grenzwert und der Differenzschaltweg größer als ein Grenzweg ist.

Damit wird eine zweite Methode zur Erkennung eines Ratschens zur Verfügung gestellt. Die zweite Methode kann allein oder in Kombination mit einer ersten Methode angewendet werden. Damit kann ein Ratschen besonders sicher erkannt werden.

Da ein Ratschen erst nach dem Auftreten von mehreren lokalen Minima bzw. Maxima erkennbar ist, wird insbesondere ein Kennwert ermittelt, der vergrößert wird, wenn der genannte zeitliche Abstand kleiner als ein Grenzabstand und/oder der genannte Differenzschaltweg größer als ein Grenzweg sind. Der Kennwert wird nach Ablauf einer festlegbaren Zeitdauer von beispielsweise 10 oder 20 ms verkleinert. Er kann alternativ oder zusätzlich verkleinert werden, wenn der genannte zeitliche Abstand nicht kleiner als der Grenzabstand und/oder der genannte Differenzschaltweg nicht größer als der Grenzweg sind. Der Grenzabstand und der Grenzweg können für das Vergrößern und das Verkleinern des Kennwerts gleiche oder unterschiedliche Werte annehmen. Ein Ratschen wird dann erkannt, wenn der Kennwert größer als ein Schwellwert ist. Zum Vergrößern des Kennwerts kann ein festgelegter erster Wert zum bisherigen Kennwert addiert werden. Es ist aber auch eine Multiplikation mit einem ersten Faktor größer 1 denkbar. Zum Verkleinern des Kennwerts kann ein festgelegter zweiter Wert vom bisherigen Kennwert subtrahiert werden. Es ist aber auch eine Multiplikation mit einem zweiten Faktor kleiner 1 denkbar.

Es ist auch möglich, dass ein Ratschen erkannt wird, wenn innerhalb einer Beobachtungszeit eine Mindestanzahl von Minima und Maxima erkannt wurden, bei denen der zeitliche Abstand kleiner als ein Grenzwert und der Differenzschaltweg größer als ein Grenzweg ist.

In Ausgestaltung der Erfindung kann der Schaltaktor eine Neutralstellung, eine Schaltstellung und eine dazwischen angeordnete Zwischenstellung einnehmen. In der Neutralstellung besteht kein Kontakt der Schaltelemente eines Gangs. Der Schaltaktor nimmt die Neutralstellung ein, wenn mittels der von ihm betätigten Schaltmuffe kein Gang eingelegt werden soll. In der Schaltstellung ist die formschlüssige Verbindung zwischen den Schaltelementen des Zielgangs hergestellt, so dass der Zielgang eingelegt oder geschaltet ist. Der Schaltaktor befindet sich in der Zwischenstellung, wenn er die Neutralstellung verlassen hat, aber der Zielgang noch nicht eingelegt ist. In der Zwischenstellung kann es also zu einem Kontakt und damit zu einem Ratschen der Schaltelemente kommen. Die Zwischenstellung ist damit keine exakte Position, sondern erstreckt sich über einen Bereich der möglichen Positionen des Schaltaktors.

Damit wird sichergestellt, dass ein Ratschen nur dann überwacht wird, wenn es auch tatsächlich auftreten kann. Die Gefahr einer falschen Erkennung eines Ratschens wird dadurch sehr gering.

In Ausgestaltung der Erfindung werden zur Überwachung eines Ratschens nach einer ersten Methode Drehzahlsignale der Schaltelemente des Zielgangs ausgewertet. Die Drehzahlen können entweder direkt mit geeigneten Sensoren gemessen werden. Es ist ebenfalls möglich, dass Drehzahlen von Wellen gemessen werden, welche mit den Schaltelementen in Antriebsverbindung stehen. Beispielsweise können die Drehzahlen einer Getriebeeingangswelle, einer Vorgelegewelle oder einer Getriebeausgangswelle gemessen werden. Bei üblichen Zahnräderwechselgetrieben in Vorgelegebauart ist ein Losrad des Zielgangs mit der Getriebeeingangswelle und der Vorgelegewelle und eine Schaltmuffe mit der Getriebeausgangswelle verbunden.

Ein Ratschen wird insbesondere dann erkannt, wenn ein Betrag der Drehzahldifferenz der Drehzahlen der Schaltelemente für eine festlegbare Zeitspanne größer als ein erster Grenzwert ist. Es können unterschiedliche Grenzwerte verwendet werden, je nachdem, ob die Drehzahl des Losrads größer oder kleiner als die Drehzahl der Schaltmuffe ist. Der Grenzwert kann beispielsweise in einem Bereich von 80 - 120 U/min liegen. Statt der Drehzahlen der Schaltelemente können auch die Drehzahlen der mit den Schaltelementen in Antriebsverbindung stehenden Wellen verarbeitet werden. Der erste Grenzwert muss dann entsprechend der Übersetzung zwischen dem Schaltelement und der Welle angepasst werden. Die genannte Zeitdauer kann beispielsweise in einem Bereich zwischen 40 und 50 ms liegen.

In Ausgestaltung der Erfindung wird ausgehend von einem oder mehreren der genannten Drehzahlsignale mittels einer Extrapolation ein Ersatzsignal bestimmt, welches zur Überwachung eines Ratschens ausgewertet wird. Zur Messung von Drehzahlen können entsprechend der Drehzahl Impulse erzeugt werden und die Anzahl der Impulse pro Zeiteinheit ausgewertet werden. Ein Impuls kann beispielsweise von einer Flanke eines Zahnrads ausgelöst werden. Das bedeutet, dass eine aktuelle Bestimmung der Drehzahl nur dann möglich ist, wenn auch ein Impuls ausgelöst wird. Aus der Zähnezahl und der Zeitspanne seit dem letzten Impuls kann die Drehzahl des Zahnrads oder der Welle bestimmt werden. Bei einer geringen Drehgeschwindigkeit und einer geringen Anzahl von Zähnen kann es unverhältnismäßig lange dauern, bis ein Impuls ausgelöst wird. Falls bis dahin der letzte Drehzahlwert beibehalten werden würde, bestände die Gefahr, dass die Prüfung auf ein Ratschen falsche Ergebnisse liefert. Um dies zu verhindern kann, sobald sich nach einer festlegbaren Zeitspanne die erfasste Drehzahl nicht ändert, mit dem zuletzt ermittelten Gradienten der Drehzahl ein Ersatzwert extrapoliert werden. Aus den Ersatzwerten und den tatsächlich bestimmten Drehzahlen wird ein Ersatzsignal erzeugt, welches für die Prüfung auf ein Ratschen verwendet wird.

Dabei kann nur das Ersatzsignal geprüft werden. Es ist auch möglich, dass das Originalsignal und zusätzlich das Ersatzsignal geprüft werden. In diesem Fall wird dann ein Ratschen erst dann erkannt, wenn beide Signale die entsprechenden Bedingungen erfüllen.

Die Bildung des Ersatzsignals kann insbesondere nur unter bestimmten Bedingungen stattfinden. Beispielsweise kann die Bildung aktiviert werden, wenn die betreffende Drehzahl kleiner als eine untere Drehzahlgrenze und gleichzeitig der Gradient kleiner als eine untere Gradientenschwelle, beispielsweise -700 U/min/s, ist. Die Bestimmung kann beispielsweise deaktiviert werden, wenn die Drehzahl größer als eine obere Drehzahlgrenze oder der Gradient größer als eine obere Gradientenschwelle, beispielsweise 0 U/min/s, ist. Die obere Drehzahlgrenze kann größer oder gleich der unteren Drehzahlgrenze sein. Bei deaktivierter Bildung des Ersatzsignals entspricht das Ersatzsignal dem ursprünglichen Signal.

In Ausgestaltung der Erfindung ist die Überwachung eines Ratschens von einer Temperatur des Zahnräderwechselgetriebes, beispielsweise einer Temperatur eines Getriebeöls, abhängig. Bei niedrigen Temperaturen kann es vorkommen, dass die Drehzahl eines Schaltelements, insbesondere des Losrads, während des Einlegens des Sollgangs überschwingt. Das bedeutet, dass die Drehzahl den Drehzahlbereich, in dem das Einlegen möglich wäre, komplett durchquert und auf der gegenüberliegenden Seite wieder verlässt. In diesen Fällen liegt meist kein Ratschen vor und das Einlegen des Zielgangs kann abgeschlossen werden. Um in diesen Fällen.nicht fälschlicherweise ein Ratschen zu erkennen, wird die Überwachung abhängig von einer Temperatur des Zahnräderwechselgetriebes ausgeführt. Insbesondere wird die Zeitspanne, für die der Betrag der Drehzahldifferenz der Drehzahlen der Schaltelemente größer als ein erster Grenzwert sein muss, bis ein Ratschen erkannt wird, verlängert. Sie kann beispielsweise bei Temperaturen des Getriebes < 0°C 10 bis 20 ms länger sein, als bei Temperaturen größer als 0°C.

In Ausgestaltung der Erfindung wird ein Gradient der Drehzahldifferenz zwischen den Drehzahlen der Schaltelemente des Zielgangs bestimmt. Dieser Gradient wird zur Überwachung eines Ratschens ausgewertet. Zeigt beispielsweise der Gradient an, dass der Betrag der Drehzahldifferenz schnell kleiner wird, so wird kein Ratschen erkannt, das Einlegen des Zielgangs also nicht abgebrochen. In diesem Fall nähern sich die beiden Drehzahlen an, so dass noch damit zu rechnen ist, dass das Einlegend es Zielgangs möglich wird. Zeigt der Gradient dagegen an, dass die Differenz nicht kleiner oder sogar größer wird, dann kann mit einem Einlegen nicht mehr gerechnet werden. In diesem Fall wird ein Ratschen erkannt und das Einlegen abgebrochen.

Um eine besonders sichere Erkennung eines Ratschens zu ermöglichen, können die erste und die zweite Methode kombiniert werden.

Dazu können die Voraussetzungen für ein Erkennen eines Ratschens nach der zweiten Methode geringer sein, wenn nach der ersten Methode bereits ein Ratschen erkannt wurde. Insbesondere ist der genannte Schwellwert, den der genannte Kennwert überschreiten muss, kleiner als ohne erkanntes Ratschen nach der ersten Methode.

Es ist auch möglich, dass ein Ratschen erst dann erkannt wird, wenn es nach der ersten und der zweiten Methode erkannt wird.

Darüber hinaus ist es möglich, dass ein Ratschen erst dann erkannt wird, wenn es nach der zweiten Methode erkannt wird und gleichzeitig der Betrag der Drehzahldifferenz zwischen den Drehzahlen der Schaltelemente des Zielgangs größer als ein zweiter Grenzwert ist. Der erste Grenzwert kann dabei gleich sein wie der erste Grenzwert, der bei der ersten Methode verwendet wird. Er kann aber auch davon abweichen.

In dem Fall, in dem der Betrag der genannten Drehzahldifferenz zwischen den Drehzahlen der Schaltelemente des Zielgangs kleiner als der zweite Grenzwert ist, wird ein Ratschen erkannt, wenn es nach der zweiten Methode für eine festlegbare zweite Zeitspanne ununterbrochen erkannt wurde.

Weitere Vorteile der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. In der Zeichnung zeigen:
- Fig. 1: einen Antriebsstrang eines Kraftfahrzeugs mit einem automatisierten, unsynchronisierten Zahnräderwechselgetriebe,
- Fig. 2a, b: eine zeitliche Darstellung von Drehzahlen von Schaltelementen, sowie eines Schaltwegs eines Schaltaktors des Zahnräderwechselgetriebes und
- Fig. 3: eine zeitliche Darstellung eines Drehzahlsignals und eines daraus abgeleiteten Ersatzsignals.

Gemäß Fig.1 verfügt ein Antriebsstrang 10 eines nicht dargestellten Kraftfahrzeugs über eine Antriebsmaschine 11, welche von einer Steuerungseinrichtung 12 angesteuert wird. Die Steuerungseinrichtung 12 steht mit einem Leistungsstellorgan 13 in Signalverbindung, mittels welchem ein Fahrzeugführer Vorgaben für die Stellung einer Drosselklappe oder einem abgegebenen Drehmoment der Antriebsmaschine 11 machen kann.

Die Antriebsmaschine 11 ist mittels einer automatisierten Kupplung 14 mit einem automatisierten, unsynchronisierten Zahnräderwechselgetriebe 15 verbunden. Mittels der Kupplung 14 kann ein Kraftfluss zwischen der Antriebsmaschine 11 und dem Zahnräderwechselgetriebe 15 hergestellt und getrennt werden. Die Steuerungseinrichtung 17 steht mit einem Schalthebel 18 in Signalverbindung, mittels welchem der Fahrzeugführer Schaltungen im Zahnräderwechselgetriebe 15 auslösen kann. Alternativ dazu können Schaltungen auch von der Steuerungseinrichtung 17 in Abhängigkeit von an sich bekannten Schaltkennfeldern ausgelöst werden.

Das Zahnräderwechselgetriebe 15 verfügt über eine Getriebeeingangswelle 19, welche mit der Kupplung 14 verbunden ist, eine Vorgelegewelle 20 und eine Getriebeausgangswelle 21, welche über ein nicht dargestelltes Achsgetriebe mit nicht dargestellten angetriebenen Rädern des Kraftfahrzeugs verbunden ist. Die Getriebeeingangswelle 19 ist mittels einer Konstanten 22 mit der Vorgelegewelle 20 verbunden. Auf der Vorgelegewelle 20 sind drehfest zwei Festräder 23, 24 für den 1. und 2. Gang des Zahnräderwechselgetriebes 15 angeordnet. Die Festräder 23, 24 kämmen mit zugehörigen Losrädern 25, 26, welche verdrehbar auf der Getriebeausgangswelle 21 angeordnet sind. Mittels einer auf der Getriebeausgangswelle 21 verdrehsicher und axial beweglich angeordneten Schaltmuffe 27 kann jeweils eines der beiden Losräder 25, 26 verdrehsicher mit der Getriebeausgangswelle 21 verbunden werden. Die Losräder 25, 26 und die Schaltmuffe 27 weisen dazu nicht dargestellte Klauen auf, die beim Einlegen des jeweiligen Gangs eine formschlüssige Verbindung eingehen. Die Losräder 25, 26 und die Schaltmuffe 27 stellen damit Schaltelemente des 1. und 2. Gangs dar.

Die Schaltmuffe 27 weist eine Neutralposition auf, welche in der Fig. 1 dargestellt ist. Dabei ist die Schaltmuffe 27 weder mit dem Losrad 25 noch mit dem Losrad 26 in Kontakt. Daneben weist die Schaltmuffe 27 jeweils eine Schaltposition für den 1. und den 2. Gang auf. In der Schaltposition ist die genannte formschlüssige Verbindung hergestellt. Zwischen der Neutralposition und der jeweiligen Schaltposition ist eine Zwischenstellung angeordnet.

Die Schaltmuffe 27 ist über ein Verbindungselement 30 mit einem Schaltaktor 31 in Form einer hydraulischen Kolben-Zylinder-Einheit verbunden. Die notwendigen Hydraulikleitungen, Ventile und Hydraulikpumpe sind nicht dargestellt. Der Schaltaktor 31 wird von der Steuerungseinrichtung 17 mittels eines Ansteuersignals angesteuert. Außerdem erfasst der Schaltaktor 31 seine aktuelle Position und damit die Position des Schaltelements 27 und sendet diese an die Steuerungseinrichtung 17. Die Position des Schaltaktors 31 kennzeichnet einen Schaltweg des Schaltaktors. Damit kann die Schaltmuffe 27 nach Maßgabe der Steuerungseinrichtung 17 axial entlang der Getriebeausgangswelle 21 verschoben und die Gänge des Zahnräderwechselgetriebes 15 ein- und ausgelegt werden.

Zusätzlich steht die Steuerungseinrichtung 17 mit einem Temperatursensor 32, welcher innerhalb des Zahnräderwechselgetriebes 15 angeordnet ist, in Signalverbindung. Mit Hilfe des Temperatursensors 32 kann eine Temperatur eines Getriebeöls des Zahnräderwechselgetriebes 15 gemessen werden.

Darüber hinaus steht die Steuerungseinrichtung 17 mit Drehzahlsensoren 33 und 34 in Signalverbindung. Mittels des Drehzahlsensors 33 kann die Drehzahl der Vorgelegewelle 20 und damit indirekt die Drehzahlen der Losräder 25 und 26 gemessen werden. Mittels des Drehzahlsensors 34 kann die Drehzahl der Getriebeausgangswelle 21 und damit die Drehzahl der Schaltmuffe 27 gemessen werden.

Das Zahnräderwechselgetriebe kann weitere Gänge aufweisen, welche über weitere Schaltelemente ein- und auslegbar sind. In diesem Fall wird bei einer Schaltung nach dem Auslegen eines Ursprungsgangs zuerst das Schaltelement des Zielgangs mittels eines Wählalktors ausgewählt und anschließend der Zielgang eingelegt.

Sobald der Schaltaktor 31 zum Einlegen eines Zielgangs angesteuert wird, wird überwacht, ob ein Ratschen der Schaltelemente des Zielgangs vorliegt.

Dazu wird zunächst geprüft, ob sich der Schaltaktor 31 in einer Zwischenstellung befindet. Dazu wird geprüft, ob sich der Schaltweg des Schaltaktors 31 innerhalb eines Bereichs zwischen Neutralstellung und Schaltstellung befindet. Ist dies der Fall, so wird geprüft, ob der Betrag der Differenz der Drehzahlen der Schaltelemente des Zielgangs länger als eine erste Zeitspanne größer als ein erster Grenzwert ist. Die Dauer der ersten Zeitspanne beträgt beispielsweise 50 ms und der erste Grenzwert beispielsweise 100 U/min. Ist die Bedingung erfüllt, so wird nach der ersten Methode ein Ratschen der Schaltelemente erkannt.

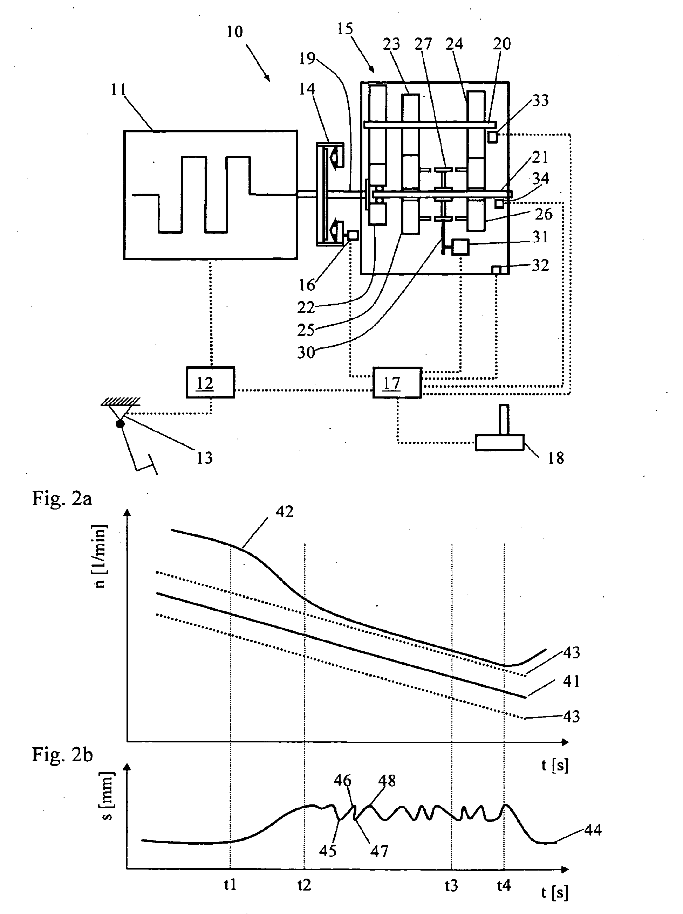

In Fig. 2a sind beispielhafte Verläufe der Drehzahlen der Schaltelemente über der Zeit dargestellt. Die Linie 41 zeigt den Verlauf des Drehzahlsignals der Schaltmuffe 27. Die Drehzahl der Schaltmuffe 27 ist proportional zur Geschwindigkeit des Kraftfahrzeugs. Die Linie 42 zeigt den Verlauf des Losrads 25. Die Begrenzungslinien 43 kennzeichnen einen Bereich um die Drehzahl der Schaltmuffe 27, innerhalb welchem der Betrag der Differenz der beiden Drehzahlen kleiner als der erste Grenzwert ist.

In Fig. 2b ist der Schaltweg des Schaltaktors 31 (Schaltwegsignal 44) über der Zeit in [mm] dargestellt.

Bis zum Zeitpunkt t1 befindet sich der Schaltaktor in der Neutralposition. Ab dem Zeitpunkt t1 wird der Schaltaktor angesteuert, um den Zielgang einzulegen. Der Schaltweg wird größer und der Schaltaktor erreicht zum Zeitpunkt t2 die Zwischenstellung. Zwischen den Zeitpunkten t1 und t2 nähert sich die Drehzahl des Losrads der Drehzahl der Schaltmuffe an, ohne jedoch in den von den Begrenzungslinien 43 abgegrenzten Bereich zu kommen. Ab dem Zeitpunkt t2 wird geprüft, ob der Betrag der Differenz der beiden Drehzahlen kleiner als der erste Grenzwert ist. Wie in Fig. 2a zu sehen, ist dies nie der Fall, so dass zum Zeitpunkt t3 die genannte Zeitspanne abgelaufen ist und auf Grund der ersten Methode zum Zeitpunkt t3 ein Ratschen erkannt wird.

Neben der ersten Methode wird ein Ratschen noch mittels einer zweiten Methode überwacht. Dazu werden ab dem Zeitpunkt t2, also wenn sich der Schaltaktor 31 in der Zwischenstellung befindet, lokale Minima und lokale Maxima des Schaltwegsignals 44 ermittelt. Es werden also die lokalen Minima 45 und 47 und die lokalen Maxima 46 und 48 ermittelt. Bei jedem Auffinden eines lokalen Minima bzw. Maxima wird der zeitliche Abstand zum vorhergehenden Maxima bzw. Minima ermittelt. Außerdem wird der Differenzschaltweg zwischen den lokalen Minima und Maxima ermittelt.

Bei jedem Auftreten eines lokalen Minimum oder Maximum wird ein Kennwert aktualisiert. Der Kennwert hat zu Beginn der Überwachung, also zum Zeitpunkt t2, den Wert 0. Es wird auch sichergestellt, dass er nicht kleiner wird als 0. Beim Auftreten eines lokalen Minimum oder Maximum wird geprüft, ob der genannte zeitliche Abstand zum vorhergehenden Maximum oder Minimum kleiner als ein Grenzabstand von 50 ms ist. Bei Temperaturen des Getriebes unter 0 °C beträgt der Grenzabstand 60 ms. Außerdem wird geprüft, ob der genannte Differenzschaltwert größer als ein Grenzweg ist. Sind beide Bedingungen erfüllt, so wird der Kennwert um den Wert 3 erhöht. Ist eine der Bedingungen nicht erfüllt, so wird der Kennwert um den Wert 1 verringert.

Die Überprüfung auf lokale Minima oder Maxima wird in einem festen Zyklus von beispielsweise 10 ms ausgeführt. Der Kennwert wird bei jedem Zyklus mit einem festen Faktor kleiner als 1, also beispielsweise 0,75 multipliziert.

Überschreitet der Kennwert einen Schwellwert von beispielsweise 20, so wird auf Grund der zweiten Methode ein Ratschen erkannt. Wird allerdings schon auf Grund der ersten Methode ein Ratschen erkannt (zum Zeitpunkt t3), so wird der Schwellwert abgesenkt. Der Schwellwert hat dann beispielsweise den Wert 15.

Der Kennwert wird zum Zeitpunkt t4 größer als der Schwellwert, also größer als 15, so dass auf Grund der zweiten Methode zum Zeitpunkt t4 ein Ratschen erkannt wurde.

Eine endgültige Entscheidung über ein Auftreten eines Ratschens, welche dann auch zu einem Abbruch des Einlegens des Zielgangs führt, wird aus der Kombination der Ergebnisse der ersten und der zweiten Methode abgeleitet.

Ein Ratschen, welches zum Abbruch des Einlegens führt, wird dann erkannt, wenn:
- ein Ratschen nach der ersten und der zweiten Methode erkannt wurde,
- ein Ratschen nach der zweiten Methode erkannt wurde und gleichzeitig der Betrag der Differenz der beiden Drehzahlen größer als der erste Grenzwert ist,
- ein Ratschen nach der zweiten Methode ununterbrochen für eine Zeitspanne von 50 ms erkannt wurde und gleichzeitig der Betrag der Differenz der beiden Drehzahlen kleiner als der erste Grenzwert ist.

Wird auf Grund dieser Regeln ein Ratschen erkannt, so wird das Einlegen des Zielgangs abgebrochen und der Schaltaktor wieder in die Neutralstellung gebracht. Anschließend wird von der Steuerungseinrichtung des Zahnräderwechselgetriebes geprüft, ob das Einlegen des Zielgangs noch notwendig ist. Ist dies der Fall, so wird ein weiterer Versuch unternommen, den Zielgang einzulegen.

Bei der Messung der Drehzahl der Vorgelegewelle und damit bei der indirekten Messung der Drehzahl des Losrads kann es in unteren Drehzahlbereichen zu großen Abweichungen zwischen der tatsächlichen und der gemessenen Drehzahl kommen. Der Grund dafür liegt darin, dass eine aktuelle Drehzahl nur ermittelt werden kann, wenn von einer Zahnflanke des zur Messung genutzten Zahnrads ein Impuls ausgelöst wird. Bei niedrigen Drehzahlen ist der Abstand zwischen zwei Impulsen sehr groß. Er kann beispielsweise größer als 50 ms sein.

Bei einer alleinigen Verwendung des mittels der Messung generierten Drehzahlsignals ist bei niedrigen Drehzahlen der Vorgelegewelle keine sichere Bestimmung eines Ratschens mit Hilfe der ersten Methode möglich. Aus diesem Grund wird ein Ersatzsignal bestimmt, welches zusätzlich zum originalen Drehzahlsignal zur Überwachung eines Ratschens verwendet wird. Mit dem Ersatzsignal werden dieselben Bedingungen abgeprüft wie für das originale Drehzahlsignal.

Das Ersatzsignal weicht nur in bestimmten Bereichen vom originalen Drehzahlsignal ab. Die abweichende Bestimmung wird aktiviert, wenn der Gradient des originalen Drehzahlsignals kleiner als -700 U/min/s und gleichzeitig die originale Drehzahl kleiner als 800 U/min ist. Sie wird deaktiviert, wenn der Gradient des originalen Drehzahlsignals größer als 0 U/min/s oder die originale Drehzahl größer als 800 U/min ist.

Zur Bestimmung des vom originalen Drehzahlsignal abweichenden Ersatzsignals wird geprüft, ob sich das originale Drehzahlsignal länger als eine festgelegte Zeitspanne, von beispielsweise 10 ms nicht ändert. Ist diese Bedingung erfüllt, so wird das Ersatzsignal ausgehend von der letzten Drehzahl bei Vorliegen eines Impulses und dem Gradienten zwischen den Drehzahlen bei Vorliegen des vorletzten und des letzten Impulses extrapoliert. Ist diese Bedingung nicht erfüllt oder wird ein neuer Impuls erzeugt, so entspricht das Ersatzsignal dem originalen Drehzahlsignal.

Das Ersatzsignal hat nicht den Anspruch, den wahren Verlauf der Drehzahl der Vorgelegewelle möglichst genau wiederzugeben. Es soll nur dazu dienen, Fehlfunktionen bei der Überwachung eines Ratschens zu verhindern.

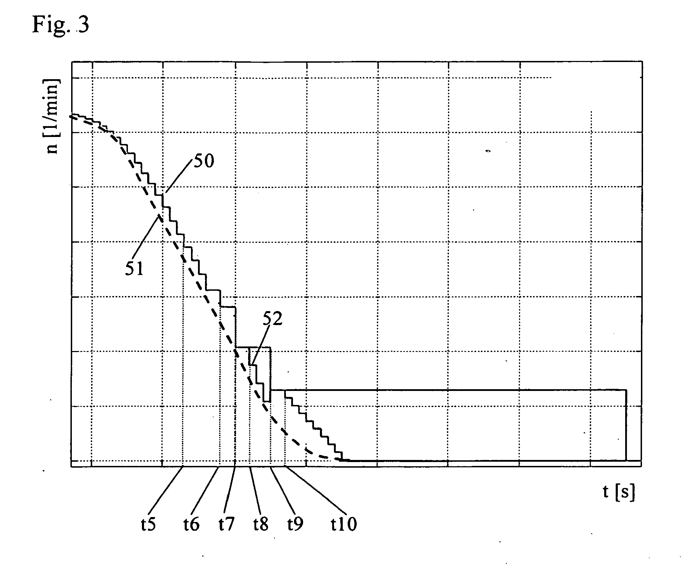

In Fig. 3 sind beispielhaft die Verläufe eines originalen Drehzahlsignals 50, eines wie beschrieben bestimmten Ersatzsignals 51 und der geschätzte tatsächliche Drehzahlverlauf 52 der Vorgelegewelle bei einem Abbremsen der Vorgelegewelle auf 0 dargestellt.

Bis zum Zeitpunkt t5 ist der Gradient des originalen Drehzahlsignals zwar kleiner als -700 U/min/s, die Werte sind aber größer als 800 U/min, so dass für das Ersatzsignal 51 das originale Drehzahlsignal 50 ohne weitere Berechnungen übernommen wird. Ab dem Zeitpunkt t5 wird geprüft, ob das originale Drehzahlsignal 50 für mehr als 10 ms unverändert bleibt. Dies ist das erste Mal zum Zeitpunkt t8 gegeben. Daher wird der Gradient des originalen Drehzahlsignals 50 zwischen den Zeitpunkten t6 und t7, also den Zeitpunkten, in denen jeweils ein Impuls erzeugt wurde, bestimmt. Mit der Drehzahl zum Zeitpunkt t8 und dem genannten Gradienten wird das Ersatzsignal so lange extrapoliert, bis zum Zeitpunkt t9 wieder ein Impuls erzeugt wurde. Aus diesem Grund springt zum Zeitpunkt t9 das Ersatzsignal 51 wieder auf das originale Signal 50. Die beiden Signale 50 und 51 sind bis zum Zeitpunkt t10, bei dem das originale Drehzahlsignal 50 wieder für mehr als 10 ms unverändert geblieben ist, identisch. Ab dem Zeitpunkt t10 wird das Ersatzsignal 51 wieder wie beschrieben extrapoliert.

## Patentansprüche

1. Verfahren zur Steuerung eines automatisierten, unsynchronisierten Zahnräderwechselgetriebes eines Kraftfahrzeugs, wobei
- ein Zielgang durch Herstellen einer formschlüssigen Verbindung zwischen Schaltelementen (25, 26, 27) des Zielgangs mittels eines Schaltaktors (31) eingelegt wird,
- bei einer Ansteuerung des Schaltaktors (31) zum Einlegen des Zielgangs überwacht wird, ob ein Ratschen der Schaltelemente (25, 26, 27) des Zielgangs vorliegt,
- bei Vorliegen eines Ratschens das Einlegen des Zielgangs abgebrochen wird und
- ein einen Schaltweg des Schaltaktors (31) kennzeichnendes Schaltwegsignal (44) ermittelt wird und das genannte Schaltwegsignal (44) zur Überwachung eines Ratschens nach einer zweiten Methode ausgewertet wird,
**dadurch gekennzeichnet, dass**
- ein lokales Minimum (45, 47) und ein lokales Maximum (46, 48) des Schaltwegsignals (44) ermittelt werden,
- ein zeitlicher Abstand und/oder ein Differenzschaltweg zwischen lokalem Minimum (45, 47) und lokalem Maximum (46, 48) bestimmt werden und
- der genannte zeitliche Abstand und/oder der genannte Differenzschaltweg zur Überwachung eines Ratschens ausgewertet werden.

2. Verfahren nach Anspruch 1,
**dadurch gekennzeichnet, dass**
- ein Kennwert ermittelt wird,
- der vergrößert wird, wenn der genannte zeitliche Abstand kleiner als ein Grenzabstand und/oder der genannte Differenzschaltweg größer als ein Grenzweg sind und
- der nach Ablauf einer festlegbaren Zeitdauer verkleinert wird und/oder wenn der genannte zeitliche Abstand nicht kleiner als der Grenzabstand und/oder der genannte Differenzschaltweg nicht größer als der Grenzweg sind und
- ein Ratschen erkannt wird, wenn der Kennwert größer als ein Schwellwert ist.

3. Verfahren nach Anspruch 1 oder 2,
**dadurch gekennzeichnet, dass**
der Schaltaktor (31) eine Neutralstellung, eine Schaltstellung und eine dazwischen angeordnete Zwischenstellung aufweist und die genannte Überwachung eines Ratschens nur durchgeführt wird, wenn sich der Schaltaktor (31) in der Zwischenstellung befindet.

4. Verfahren nach Anspruch 1, 2 oder 3,
**dadurch gekennzeichnet, dass**
zur Überwachung eines Ratschens nach einer ersten Methode Drehzahlsignale (41, 42, 50) der Schaltelemente (25, 26, 27) des Zielgangs ausgewertet werden.

5. Verfahren nach Anspruch 4,
**dadurch gekennzeichnet, dass**
ausgehend von einem der genannten Drehzahlsignale (50) mittels einer Extrapolation ein Ersatzsignal (51) bestimmt wird, welches zur Überwachung eines Ratschens ausgewertet wird.

6. Verfahren nach Anspruch 4 oder 5,
**dadurch gekennzeichnet, dass**
eine Drehzahldifferenz zwischen den Drehzahlen der Schaltelemente (25, 26, 27) des Zielgangs bestimmt wird und ein Ratschen erkannt wird, wenn der Betrag der Drehzahldifferenz größer als ein erster Grenzwert ist.

7. Verfahren nach Anspruch 6,
**dadurch gekennzeichnet**, das
ein Ratschen erkannt wird, wenn der Betrag für eine festlegbare erste Zeitspanne größer als der Grenzwert ist.

8. Verfahren nach einem der Ansprüche 4 bis 7,
**dadurch gekennzeichnet, dass**
die Überwachung von einer Temperatur des Zahnräderwechselgetriebes (15) abhängig ist.

9. Verfahren nach einem der Ansprüche 4 bis 8,
**dadurch gekennzeichnet, dass**
ein Gradient der Drehzahldifferenz zwischen den Drehzahlen der Schaltelemente (25, 26, 27) des Zielgangs bestimmt wird, welcher zur Überwachung eines Ratschens ausgewertet wird.

10. Verfahren nach einem der Ansprüche 4 bis 9,
**dadurch gekennzeichnet, dass**
Voraussetzungen für ein Erkennen eines Ratschens nach der zweiten Methode geringer sind, insbesondere der genannte Schwellwert kleiner ist, wenn nach der ersten Methode bereits ein Ratschen erkannt wurde.

11. Verfahren nach einem der Ansprüche 4 bis 10,
**dadurch gekennzeichnet, dass**
ein Ratschen erst dann erkannt wird, wenn es nach der ersten und der zweiten Methode erkannt wird.

12. Verfahren nach einem der Ansprüche 4 bis 11,
**dadurch gekennzeichnet, dass**
ein Ratschen erst dann erkannt wird, wenn es nach der zweiten Methode erkannt wird und gleichzeitig der Betrag der Drehzahldifferenz zwischen den Drehzahlen der Schaltelemente (25, 26, 27) des Zielgangs größer als ein zweiter Grenzwert ist.

13. Verfahren nach einem der Ansprüche 4 bis 12,
**dadurch gekennzeichnet, dass**
in dem Fall, in dem der Betrag der Drehzahldifferenz zwischen den Drehzahlen der Schaltelemente (25, 26, 27) des Zielgangs kleiner als der zweite Grenzwert ist, ein Ratschen erkannt wird, wenn es nach der zweiten Methode für eine festlegbare zweite Zeitspanne ununterbrochen erkannt wurde.

14. Steuerungseinrichtung eines automatisierten, unsynchronisierten Zahnräderwechselgetriebes eines Kraftfahrzeugs, welches dazu vorgesehen ist,
- einen Zielgang durch Herstellen einer formschlüssigen Verbindung zwischen Schaltelementen (25, 26, 27) des Zielgangs mittels einer Ansteuerung eines Schaltaktors (31) einzulegen,
- bei einer Ansteuerung des Schaltaktors (31) zum Einlegen des Zielgangs zu überwachen, ob ein Ratschen der Schaltelemente (25, 26, 27) des Zielgangs vorliegt,
- bei Vorliegen eines Ratschens das Einlegen des Zielgangs abzubrechen und
- ein einen Schaltweg des Schaltaktors (31) kennzeichnendes Schaltwegsignal (44) zu ermitteln und das genannte Schaltwegsignal (44) zur Überwachung eines Ratschens nach einer zweiten Methode auszuwerten,
**dadurch gekennzeichnet, dass** die Steuerungseinrichtung weiterhin dazu vorgesehen ist,
- ein lokales Minimum (45, 47) und ein lokales Maximum (46, 48) des Schaltwegsignals (44) zu ermitteln,
- ein zeitlicher Abstand und/oder ein Differenzschaltweg zwischen lokalem Minimum (45, 47) und lokalem Maximum (46, 48) zu bestimmen und
- der genannte zeitliche Abstand und/oder der genannte Differenzschaltweg zur Überwachung eines Ratschens auszuwerten.

## Claims

1. Method for controlling an automated non-synchromesh speed-change gearbox of a motor vehicle, wherein
- a target gear is engaged by establishing a positive connection between shifting components (25, 26, 27) of the target gear by means of a shifting actuator (31),
- as the shifting actuator (31) is selected for engaging the target gear, it is monitored whether there is a ratcheting of the shifting components (25, 26, 27) of the target gear,
- in the presence of a ratcheting the engagement of the target gear is aborted, and
- a shifting distance signal (44) characterising a shifting distance of the shifting actuator (31) is determined and the shifting distance signal (44) is evaluated for monitoring a ratcheting according to a second method, **characterised in that**
- a local minimum (45, 47) and a local maximum (46, 48) of the shifting distance signal (44) are determined,
- a time interval and/or a differential shifting distance between the local minimum (45, 47) and the local maximum (46, 48) is/are determined, and
- the said time interval and/or the said differential shifting distance is/are evaluated for monitoring a ratcheting.

2. Method according to claim 1,
**characterised in that**
- a characteristic value is determined,
- which is increased if the said time interval is less that a limit interval and/or if the said differential shifting distance is more than a limit distance, and
- which is reduced on expiry of a definable period of time and/or if the said time interval is not less that the limit interval and/or if the said differential shifting distance is not more than the limit distance, and
- **in that** a ratcheting is detected if the characteristic value is more than a threshold value.

3. Method according to claim 1 or 2,
**characterised in that**
the shifting actuator (31) has a neutral position, a shifting position and an intermediate position situated in between, and **in that** a ratcheting is only monitored if the switching actuator (31) is in the intermediate position.

4. Method according to claim 1, 2 or 3,
**characterised in that**
for monitoring a ratcheting according to a first method, speed signals (41, 42, 50) of the shifting components (25, 26, 27) are evaluated.

5. Method according to claim 4,
**characterised in that**
on the basis of the said speed signals (50), an equivalent signal (51) which is used for monitoring a ratcheting is determined by means of an extrapolation.

6. Method according to claim 4 or 5,
**characterised in that**
a speed differential between the speeds of the shifting components (25, 26, 27) of the target gear is determined and a ratcheting is detected if the amount of the speed differential is higher than a first limit value.

7. Method according to claim 6,
**characterised in that**
a ratcheting is detected if the amount is higher than the limit value for a definable first period of time.

8. Method according to any of claims 4 to 7,
**characterised in that**
the monitoring is dependent on a temperature of the speed-change gearbox.

9. Method according to any of claims 4 to 8,
**characterised in that**
a gradient of the speed differential between the speeds of the shifting components (25, 26, 27) of the target gear is determined, which gradient is evaluated for monitoring a ratcheting.

10. Method according to any of claims 4 to 9,
**characterised in that**
preconditions for a detection of a ratcheting according to the second method are lower, in particular the said threshold value is lower, if a ratcheting has already been detected according the first method.

11. Method according to any of claims 4 to 10,
**characterised in that**
a ratcheting is only detected if it is detected according to the first and the second methods.

12. Method according to any of claims 4 to 11,
**characterised in that**
a ratcheting is only detected if it is detected according to the second method and the amount of the speed differential between the speeds of the shifting components (25, 26, 27) of the target gear is higher than a second limit value.

13. Method according to any of claims 4 to 12,
**characterised in that**
if the amount of the speed differential between the speeds of the shifting components (25, 26, 27) of the target gear is less than the second limit value, a ratcheting is detected if it has been detected continuously according to the second method for a definable period of time.

14. Control device of an automated non-synchromesh speed-change gearbox of a motor vehicle, which is provided
- to engage a target gear by establishing a positive connection between shifting components (25, 26, 27) of the target gear by means of a shifting actuator (31),
- as the shifting actuator (31) is selected for engaging the target gear, to monitor whether there is a ratcheting of the shifting components (25, 26, 27) of the target gear,
- in the presence of a ratcheting, to abort the engagement of the target gear, and
- to determine a shifting distance signal (44) characterising a shifting distance of the shifting actuator (31) and to evaluate the shifting distance signal (44) for monitoring a ratcheting according to a second method,
**characterised in that** the control device is further provided
- to determine a local minimum (45, 47) and a local maximum (46, 48) of the shifting distance signal (44)
- to determine a time interval and/or a differential shifting distance between the local minimum (45, 47) and the local maximum (46, 48), and
- to evaluate the said time interval and/or the said differential shifting distance for monitoring a ratcheting.

## Revendications

1. Procédé de commande d'une boîte de vitesses automatisée à engrenages non synchronisée d'un véhicule automobile,
- une vitesse cible étant enclenchée par une liaison par engagement géométrique entre des éléments de commutation (25, 26, 27) de la vitesse cible au moyen d'un actionneur (31)
- on surveille, lors de la commande de l'actionneur (31) pour l'enclenchement de la vitesse cible, s'il se produit un grincement des éléments de commutation (25, 26, 27) de la vitesse cible,
- dès qu'un grincement est détecté, l'enclenchement de la vitesse cible est arrêté et
- un signal de course de passage de vitesse (44) indiquant la course de passage de vitesse de l'actionneur (31) est détecté et ledit signal course de passage de vitesse (44) pour surveiller un grincement d'après un second procédé est évalué, **caractérisé en ce qu'**
- un minimum local (45, 47) et un maximum local (46, 48) du signal de course de passage de vitesse (44) est détecté,
- un intervalle temporel et / ou une course de passage de vitesse différentielle entre le minium local (45, 47) et le maximum local (46, 48) est déterminé,
- ledit intervalle temporel et / ou ladite course de passage de vitesse différentielle pour surveiller un grincement est évalué.

2. Procédé selon la revendication 1, **caractérisé en ce qu'**
- une valeur caractéristique est détectée,
- qui est augmentée lorsque ledit intervalle temporel est inférieur à un intervalle limite et / ou que ladite course de passage de vitesse différentielle est supérieure à la course limite et
- qui est réduite après écoulement de la durée déterminée et / ou lorsque ledit intervalle temporel est inférieur à l'intervalle limite et / ou que ladite course de passage de vitesse différentielle est supérieure à la course limite et
- un grincement est détecté lorsque la valeur caractéristique est supérieure à la valeur seuil.

3. Procédé selon la revendication 1 ou 2, **caractérisé en ce que** l'actionneur (31) présente une position neutre, une position de commutation et une position intermédiaire disposée entre les deux et ladite surveillance d'un grincement est uniquement effectuée lorsque l'actionneur (31) se trouve dans la position intermédiaire.

4. Procédé selon la revendication 1, 2 ou 3, **caractérisé en ce que** pour surveiller un grincement selon un premier procédé, des signaux de régime (41, 42, 50) des éléments de commutation (25, 26, 27) de la vitesse cible sont évalués.

5. Procédé selon la revendication 4, **caractérisé en ce qu'**à partir d'un desdits signaux de régime (50) au moyen d'une extrapolation un signal de substitution (51) est déterminé lequel est évalué pour la surveillance d'un grincement.

6. Procédé selon la revendication 4 ou 5, **caractérisé en ce qu'**une différence de régime est déterminée entre les régimes des éléments de commutation (25, 26, 27) de la vitesse cible et un grincement est détecté lorsque la somme des différences de régime est supérieure à une première valeur limite.

7. Procédé selon la revendication 6, **caractérisé en ce qu'**un grincement est détecté lorsque la somme pour une première durée déterminée est supérieure à la valeur limite.

8. Procédé selon l'une quelconque des revendications 4 à 7, **caractérisé en ce que** la surveillance de la boîte de vitesse à engrenage (15) dépend d'une température.

9. Procédé selon l'une quelconque des revendications 4 à 8, **caractérisé en ce qu'**un gradient de la différence de régime entre les régimes des éléments de commutation (25, 26, 27) de la vitesse cible est déterminé lequel est évalué pour la surveillance d'un grincement.

10. Procédé selon l'une quelconque des revendications 4 à 9, **caractérisé en ce que** des conditions pour la détection d'un grincement selon le second procédé sont plus petites, en particulier ladite valeur seuil est plus petite, lorsque selon le premier procédé un grincement a déjà été détecté.

11. Procédé selon l'une quelconque des revendications 4 à 10, **caractérisé en ce qu'**un grincement est détecté lorsqu'il est détecté selon le premier et le second procédés.

12. Procédé selon l'une quelconque des revendications 4 à 11, **caractérisé en ce qu'**un grincement est alors détecté lorsqu'il est détecté selon le second procédé et simultanément que la somme de la différence de régime entre les régimes des éléments de commutation (25, 26, 27) de la vitesse cible est supérieure à une seconde valeur limite.

13. Procédé selon l'une quelconque des revendications 4 à 12, **caractérisé en ce qu'**au cas où la somme de la différence de régime entre les régimes des éléments de commutation (25, 26, 27) de la vitesse cible est inférieure à la seconde valeur limite, un grincement est détecté lorsqu'il a été détecté selon le second procédé sans interruption pendant une seconde durée déterminée.

14. Procédé de commande d'une boîte de vitesses automatisée à engrenages non synchronisée d'un véhicule automobile, pour laquelle est prévu de :
- enclencher une vitesse cible par une liaison par engagement géométrique entre des éléments de commutation (25, 26, 27) de la vitesse cible au moyen d'une commande d'un actionneur (31)
- surveiller, lors d'une commande de l'actionneur (31) pour l'enclenchement de la vitesse cible, s'il se produit un grincement des éléments de commutation (25, 26, 27) de la vitesse cible,
- arrêter l'enclenchement de la vitesse dès qu'un grincement est détecté et
- détecter un signal de course de passage de vitesse (44) indiquant une course de passage de vitesse de l'actionneur (31) et évaluer ledit signal course de passage de vitesse (44) pour surveiller un grincement d'après un second procédé, **caractérisé en ce que** le dispositif de commande est prévu pour
- détecter un minimum local (45, 47) et un maximum local (46, 48) du signal de course de passage de vitesse (44),
- déterminer un intervalle temporel et / ou une course de passage de vitesse différentielle entre le minium local (45, 47) et le maximum local (46, 48) et
- évaluer ledit intervalle temporel et / ou la course de passage de vitesse différentielle pour surveiller un grincement.
